# EUROPEAN PATENT APPLICATION

(11) **EP 2 289 674 A1**
(43) Date of publication of application: **02.03.2011**
(21) Application number: 10251156.5
(22) Date of filing: 25.06.2010
(51) Int. Cl.: B26D 1/08

(54) **Portable printer equipped with manual cutter**

(30) Priority: 26.08.2009 KR 20090079355
(71) Applicant: Bixolon Co., Ltd., Youngtong-gu Suwon, Gyunggi-do (KR)
(72) Inventor: Nam, Sang Ik, Gyunggi-do (KR); Keem, Joonhyoung, Yeongtong-gu Gyunggi-do (KR)
(74) Representative: Mounteney, Simon James

(57) **Abstract**

A portable printer (10) equipped with a manual cutter (100).
The portable printer equipped with a manual cutter may include: a fixed blade (140) disposed at one side of a paper outlet; a movable blade holder (110) disposed adjacent to the paper outlet opposite to the fixed blade; a movable blade (120) slidably mounted in the movable blade holder; an operator (130) slidably mounted in the movable blade holder and connected with the movable blade; and elastic members (111) having ends connected to the movable blade holder and the other ends supporting the movable blade or the sides of the operator, and providing restoring force to return the movable blade or the operator to the initial position.
Since the portable printer equipped with a manual cutter does not use a power source to cut paper, it is possible to reduce power consumption for the printer and cut paper with the cut surface smooth. Further, it is possible to improve convenience such that a user can operate the printer worn on the body with one hand, and reduce malfunctions by maximally preventing scraps of paper.

## Description

### BACKGROUND OF THE INVENTION

### Field of the Invention

The present invention relates to a portable printer equipped with a manual cutter.

### Description of the Related Art

In general, POS (Point of Sales) systems, Auto ID systems, and the like use printers to output receipts or labels. These printers generally use a continuous stream of paper and the printers using the continuous stream of paper are equipped with a cutter for cutting outputted paper.

As for existing cutters, a scissors type, a guillotine type, and a rotary type, and the like, which are operated in an auto-cutting way by a driving force from a motor when power is supplied, as well as a tear bar operated in a manual-cutting manner, are known in the related art.

The auto-cutting type has a pair of blades (a fixed blade and a movable blade), in which the movable blade moves and cuts paper positioned between the blades.

On the other hand, the manual-cutting type tear bar has a fixed plastic or metal plate with a saw-toothed blade formed on the edge thereof, and in this configuration, a user cuts paper by contacting the paper with the tear bar and tearing it.

In the auto-cutting type, paper is cut with the cut surface smooth and the output paper is automatically cut after printing, such that it is convenient. However, since power is required to automatically cut paper, and an operating motor and a circuit are required for the auto cutting, not only the configuration of the product is complicated, but also the product cost is high.

On the other hand, for people such as traffic policemen or delivery persons who need a portable printer, the printer should be equipped with a cutter that can minimize power for long-time use, because batteries are used for the power source. Therefore, manual-cutting type cutters are occasionally used for their lack of power consumption, even though automatic cutters are convenient to use and have good cut quality.

The manual-cutting type cutters have the advantage of not requiring power for cutting, having a simple configuration, and making it possible to reduce the cost thereof. The manual-cutting type cutters, however, leave a saw shape on the paper after cutting, such that the cut surface is not smooth and many scraps of paper are made in the process of cutting. The scraps of paper frequently gather inside the printer and cause problems in the operation of the printer by adversely affecting an optical sensor for detecting paper and the driving system.

In particular, portable printers need to be fixed to a body for use, such as a belt; however, when the printers are not firmly fixed, they may fail to cut paper, such that the user has to cut the paper with both hands. This increases inconvenience in the use of the printers, rather than makes it possible to use the advantage of the portable printers in that both hands are free.

Therefore, an effort must be made in order to maintain the advantage of auto-cutting type cutters and simultaneously remove the disadvantage of the manual cutters.

### SUMMARY OF THE INVENTION

The present invention has been made in consideration of at least any one of the requirements or problems found in printers equipped with the existing cutter.

An aspect of the present invention is to cut paper with the cut surface smooth, without power for cutting the paper.

An aspect of the present invention is also to cut paper with the cut surface smooth while realizing an improvement in convenience such that a user can operate the printer worn on the body with one hand.

An aspect of the present invention is also to minimize malfunctions due to scraps of paper by minimizing the scraps of paper in cutting.

An aspect of the present invention is also to prevent a safety accident by allowing cutting only when a printer cover is closed.

An aspect of the present invention is also to prevent a paper jam by stopping the discharge of paper in cutting.

A portable printer equipped with a manual cutter related to an embodiment for achieving at least any one of the objects may have the following features.

The present invention is basically configured such that a movable blade that has operated for cutting can automatically return to the initial position, after manual cutting.

According to an aspect of the present invention, there is provided a portable printer equipped with a manual cutter, which includes: a fixed blade disposed at one side of a paper outlet; a movable blade holder disposed adjacent to the paper outlet opposite to the fixed blade; a movable blade slidably mounted in the movable blade holder; an operator slidably mounted in the movable blade holder and connected with a predetermined portion of the movable blade; and elastic members having ends supporting predetermined portions of the movable blade holder and the other ends supporting the movable blade or the sides of the operator, and providing restoring force to return the movable blade or the operator to the initial position.

In this configuration, the movable blade may have a movable blade body and a connecting portion formed at a predetermined portion of the movable blade body to be attachable to or detachable from the operator. Meanwhile, the movable blade body may further have a cutting blade opposite to the fixed blade, and the cutting blade may be formed to decline downward to the center from both ends.

Further, the movable blade may further have protrusion parts at both ends of the cutting blade to guide paper or limit the movement range of the movable blade.

Further, the movable blade may further have an anti-cutting groove at the center of cutting blade to prevent paper from being completely cut through.

Meanwhile, a stopper may further be provided at a predetermined portion of the printer body to allow cutting only when the printer cover is closed. Further, an insertion groove in which the stopper is fitted may be further formed at a predetermined portion of the movable blade.

Further, a sensing unit is further provided at a predetermined portion in the printer body to stop paper discharged in cutting, and the operator may further have a leg such that the position of the operator is sensed by the sensing unit.

Further, a manual cutting blade may further be provided adjacent to the paper outlet.

### BRIEF DESCRIPTION OF THE DRAWINGS

The above and other aspects, features and other advantages of the present invention will be more clearly understood from the following detailed description taken in conjunction with the accompanying drawings, in which:

FIG. 1A is a perspective view showing the outer shape of a portable printer equipped with a manual cutter according to an embodiment of the present invention;

FIG. 1B is a perspective view showing the case in which a cover of the portable printer equipped with the manual cutter shown in FIG. 1A is open;

FIG. 2 is a perspective view showing the outer shape of a manual cutter according to an embodiment of the present invention;

FIG. 3A is a perspective view the internal structure with a movable blade holder, a movable blade, a fixed blade, and a stopper which are included in a manual cutter according to an embodiment of the present invention;

FIG. 3B is a perspective view showing an exemplary configuration of the movable blade shown in FIG. 3A;

FIG. 4A is a perspective view the configuration shown in FIG. 3, which further includes an operator;

FIG. 4B is a perspective view showing the operation for cutting of the manual cutter shown in FIG. 4A according to an embodiment;

FIG. 5 is a perspective view showing the configuration shown in FIG. 4A, which further includes a manual cutting blade; and

FIG. 6 is a perspective view showing the configuration shown in FIG. 5, which further includes a movable blade cover and a fixed blade cover.

### DETAILED DESCRIPTION OF THE PREFERRED EMBODIMENT

In order to help understand the features described above of the present invention, hereinafter a portable printer equipped with a manual cutter will be described in detail with reference to embodiments of the present invention.

Hereinafter, although the following embodiments will be described on the basis of examples that are the most suitable for understanding the technical features of the present invention, the present invention is not limited to the embodiments and it is exemplified that the present invention may be achieved by the embodiments. Therefore, the present invention may be modified from the following embodiments in various ways within the scope of the present invention and it should be understood that the modified embodiments are included in the scope of the present invention.

Further, in the reference numerals provided in the accompanying drawings to help understand the following embodiments, the same or extending reference numerals indicate related components among the components that have the same function in each embodiment.

The embodiments associated with the present invention are basically configured such that a movable blade that has operated for cutting can automatically return to the initial position, after manual cutting.

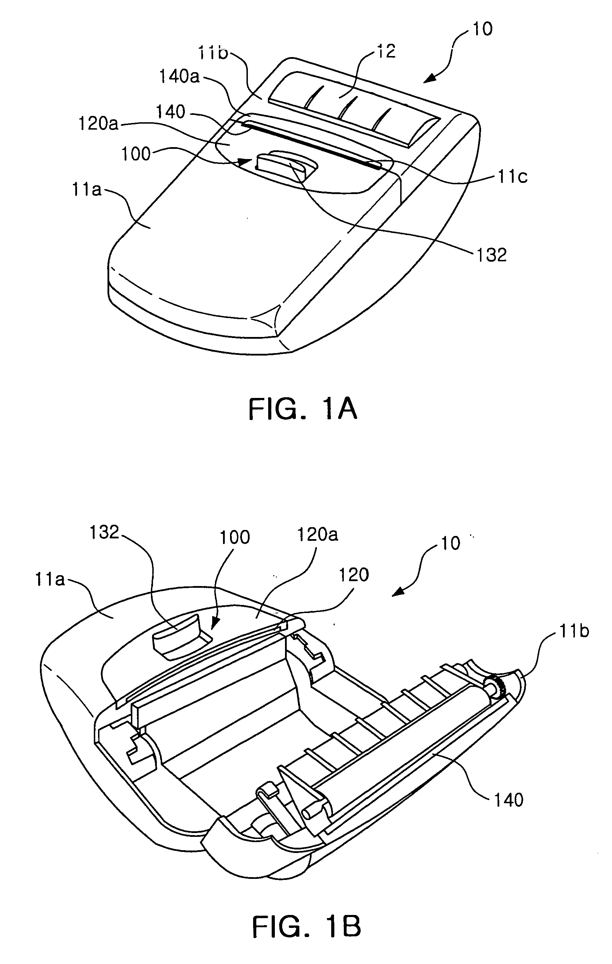

As shown in FIGS. 1A and 1B, a portable printer 10 is equipped with a manual cutter according to an embodiment of the present invention. The portable printer 10 includes a printer body 11a equipped with a device for outputting data on paper and an openable printer cover 11b provided at a predetermined position in the printer body 11a. Further, the printer cover 11b may have a paper seat 12 retaining paper that can be continuously supplied.

Meanwhile, the portable printer 10 may have a paper outlet 11c discharging paper. The embodiment shown in the figures exemplifies the case in which the paper outlet 11c is formed between the printer body 11a and the printer cover 11b.

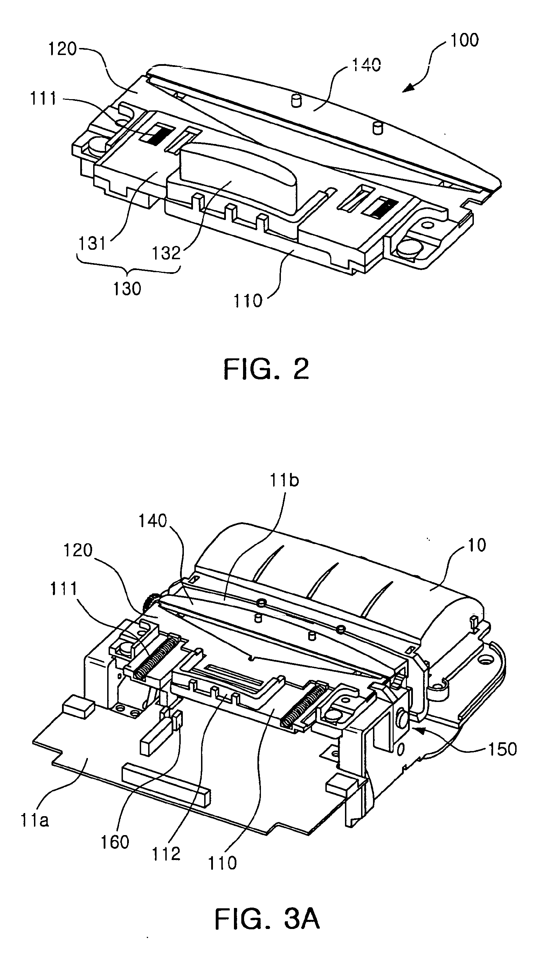

Further, the portable printer 10 may have a cutter 100 according to an embodiment of the present invention. The cutter 100, as shown in FIG. 2, may be configured to have a movable blade 120 disposed at any one side of the paper outlet 11c and a fixed blade 140 disposed at the other side of the paper outlet 11c, opposite to the movable blade 120 , such that paper is cut by moving the movable blade 120. In this configuration, the movable blade 120 may be slidably disposed in a movable blade holder 110, with any one end movably fixed to an operator 130.

In this configuration, the fixed blade 140, as shown in FIGS. 1A and 1B, may be mounted to the printer cover 11b. Unlike, the fixed blade 140 may be mounted to the printer body 11a, at a predetermined distance from the movable blade 120. Further, the movable blade holder 110 may be a portion of the printer body 11a or be formed on the printer body 11a as a separate member.

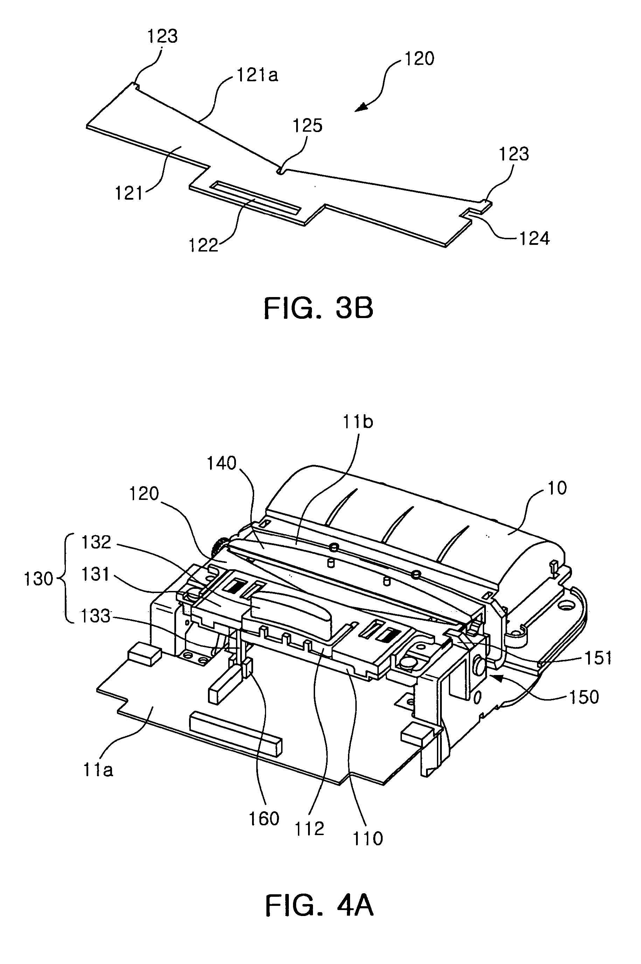

As an example of the configuration of the cutter 100, as shown in the FIG.3, the movable blade holder 110 is provided at a predetermined portion of the printer body 11a. In this configuration, the movable blade holder 110 may be positioned close to the paper outlet 11c such that a portion of the movable blade 120 overlaps with the fixed blade 140, crossing the paper outlet 11c, when the movable blade 120 moves.

The movable blade 120 may be slidably mounted to the movable blade holder 110. Further, the fixed blade 140 is disposed opposite to the movable blade 120.

As shown in FIG. 3B, the movable blade 120 has a movable blade body 121 that can slide with the movable blade holder 110 and the movable blade body 121 may have a cutting blade 121a opposite to the fixed blade 140. The cutting blade 121a may be formed to decline downward to the center from both ends while being opposite to the fixed blade 140. In contrast, the cutting blade 121a may also be formed to decline downward to both ends from the center while being opposite to the fixed blade 140.

Meanwhile, the movable blade 120 may further have protrusion parts 123 at both ends of cutting blade 121a to guide discharged paper or limit the position (distance) that the movable blade 120 moves to cut paper.

Further, when the cutting blade 121a is formed to decline downward to the center from both ends while being opposite to the fixed blade 140, an anti-cutting groove 125 may be further formed at the center to prevent paper from being completely cut through.

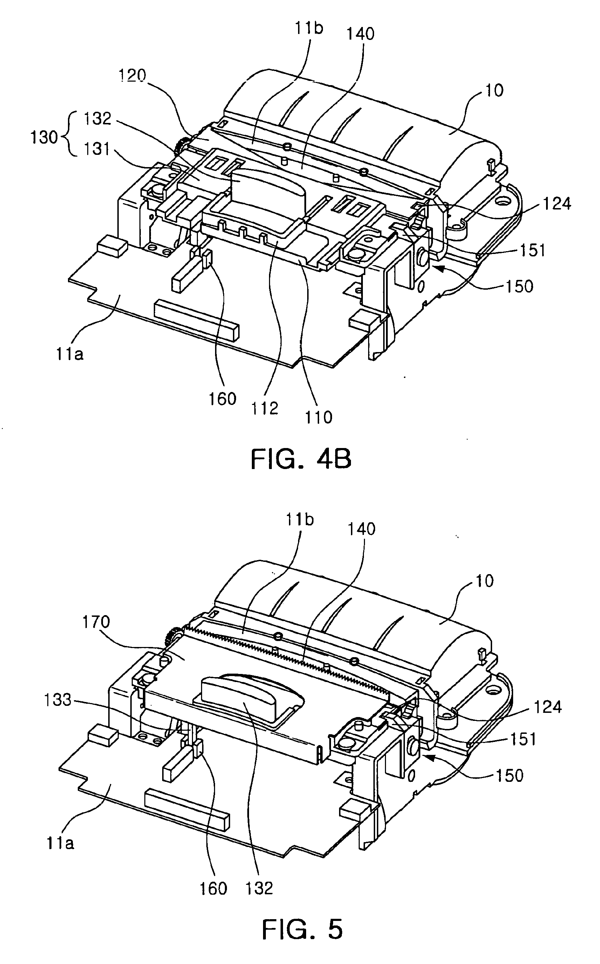

The movable blade 120 that may have the above configuration may be connected to the operator 130, as shown in FIG. 4, to easily move for cutting. In this configuration, a connecting portion 122 for connecting with the operator 130 may be formed at a predetermined portion of the movable blade body 121.

The operator 130 connected with the movable blade 120 is slidably mounted on the movable blade holder 110 to be moved toward the fixed blade 140 by the user operation. In this configuration, a portion of the operator 130 is supported by elastic members 111 disposed within the movable blade holder 110, such that the operator 130 can return to the initial position before the user operates the operator 130, after cutting.

That is, according to the configuration described above, when the operator 130 moves toward the paper outlet 11c to cut paper, the elastic members 111 are compressed, however, the elastic members 111 may be extended, when the operator 130 moves toward the paper outlet 11c. This configuration may be achieved by connecting one end of the elastic member 111 to a predetermined portion of the operator 130 and connecting the other end thereof to a predetermined portion of the printer body 11a, such that a detailed description will be omitted.

As described above, the operator 130 can slide on the movable blade holder 110 against force from the elastic members 111, in which, for smooth operation, an operation button 132 may be provided at a predetermined position in an operator body 131. Meanwhile, the operation button 132 may have a knob shape.

Further, in order for the operator 130 supported by the elastic members 111 to maintain the initial position, the movable blade holder 110 may further have a supporter 112 to support a predetermined portion of the operation button 132 or the operator body 131.

Meanwhile, a stopper 150 may be further provided such that the movable blade 120 cannot move, with the printer cover 11b opened, in order to prevent a safety accident. The stopper 150 may be provided at a predetermined portion of the printer body 11a to selectively fix the movable blade 120. For example, the stopper 150 can be movably mounted while being supported by an elastic member (not shown) and may have a protrusion 151 at a predetermined position. Further, an insertion groove 124 in which the protrusion 151 of the stopper 150 is fitted may be further formed at a predetermined position in the movable blade body 121.

According to this configuration, with the printer cover 11b closed, the stopper 150 is pressed by the printer cover 11b and the protrusion 151 of the stopper 150 separates from the insertion groove 124 of the movable blade body 121, such that the movable blade 120 can slide. Further, when the printer cover 11b is open, the stopper 150 is released from the printer cover 11b and the protrusion 151 of the stopper 150 is fitted in the insertion groove 124 of the movable blade body 121, such that the movable blade 120 cannot move.

On the other hand, a sensing unit 160 may be further provided at a predetermined portion of the printer body 11a to stop paper being discharged therefrom, while the movable blade 120 cuts the discharged paper. In this configuration, the operator 130 may further have a leg 133 at a predetermined portion and the leg 133 may be sensed by the sensing unit 160. According to this configuration, when the movable blade 120 is moved by the operator 130 to cut paper, the leg 133 separates from the sensing unit 160 and the sensing unit 160 senses the separation of the leg 133. That is, as the sensing unit 160 checks whether the leg 133 separates, it is possible to detect whether the movable blade 120 has moved. In other words, when the movable blade 120 moves, it is possible to stop the discharged paper, on the basis of an event transmitted from the sensing unit 160.

As shown in FIG. 5, a manual cutting blade 170 may be further provided adjacent to the paper outlet 11c. The manual cutting blade 170 may be a common blade manually operated, and disposed at the upper portion of the cutter 100, described above, according to an embodiment of the present invention.

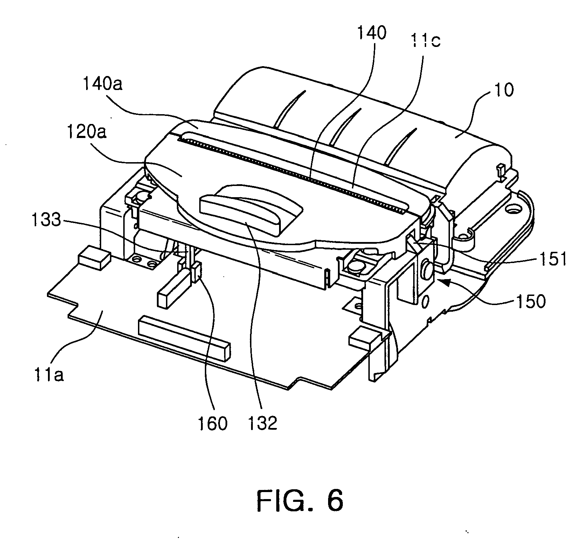

Further, as shown in FIG. 6, a movable blade cover 120a and a fixed blade cover 140a may be further provided such that the movable blade 120 and the fixed blade 140 are not exposed to the outside. In this configuration, as shown in the figure, the movable blade cover 120a and the fixed blade cover 140a may be formed of separate members from the printer body 11a and cover 11b. Unlike, the movable blade cover 120a and the fixed blade cover 140a may be portions of the printer body 11a and cover 11b.

The portable printer equipped with a manual cutter according to the present invention is not limited to embodiments of portable printers equipped with the manual cutter described above, and the embodiments may be partially or entirely selectively combined to modify the embodiments in various ways.

As set forth above, according to exemplary embodiments, since a power source is not required to cut paper, it is possible to reduce power consumption and cut paper with the cut surface smooth.

Further, according to the present invention, it is possible to improve convenience such that a user can operate the printer worn on the body with one hand, and make the cut surface smooth even though the user uses only one hand.

Further, according to the present invention, it is possible to minimize scraps of paper by smoothly cutting paper, and, as the scraps of paper are reduced, it is possible to reduce malfunctions due to the scraps of paper, by reducing the scraps of paper.

Further, according to the present invention, it is possible to prevent a safety accident by allowing cutting only when the printer cover is closed.

Further, according to the present invention, it is possible to prevent a paper jam by stopping paper being discharged in a cutting process.

While the present invention has been shown and described in connection with the exemplary embodiments, it will be apparent to those skilled in the art that modifications and variations can be made without departing from the scope of the invention as defined by the appended claims.

## Claims

1. A portable printer equipped with a manual cutter, comprising:
a fixed blade disposed at one side of a paper outlet;
a movable blade holder disposed adjacent to the paper outlet opposite to the fixed blade;
a movable blade slidably mounted in the movable blade holder;
an operator slidably mounted in the movable blade holder and connected with a predetermined portion of the movable blade; and
elastic members having ends supporting predetermined portions of the movable blade holder and the other ends supporting the movable blade or the sides of the operator, and providing restoring force to return the movable blade or the operator to the initial position.

2. The portable printer equipped with a manual cutter of claim 1, wherein the movable blade has a movable blade body having a cutting blade formed to decline downward to the center from both ends, opposite to the fixed blade, and a connecting portion formed at a predetermined portion of the movable blade body to be attachable to or detachable from the operator.

3. The portable printer equipped with a manual cutter of claim 2, wherein the movable blade further has protrusion parts at both ends of the cutting blade to guide paper or limit the movement range of the movable blade.

4. The portable printer equipped with a manual cutter of any one of claims 1 to 3, wherein the movable blade further has an anti-cutting groove at the center of the cutting blade to prevent paper from being completely cut through.

5. The portable printer equipped with a manual cutter of claim 1, wherein a stopper is further provided at a predetermined portion of the printer body and an insertion groove in which the stopper is fitted is further provided at a predetermined portion of the movable blade.

6. The portable printer equipped with a manual cutter of claim 1, wherein a sensing unit is further provided at a predetermined portion in the printer body and the operator has a leg such that the position of the operator is sensed by the sensing unit.

7. The portable printer equipped with a manual cutter of claim 1, wherein a manual cutting blade is further provided adjacent to the paper outlet.
